# EUROPÄISCHE PATENTSCHRIFT

(11) **EP 4 169 707 B1**
(45) Veröffentlichungstag und Bekanntmachung des Hinweises auf die Patenterteilung: **02.09.2026**
(21) Anmeldenummer: 22216138.2
(22) Anmeldetag: 27.11.2020
(51) Int. Cl.: B32B 7/12, B32B 15/085, B32B 15/20, B32B 27/32, B32B 27/08, B32B 27/10, B32B 29/00, B32B 27/34, B32B 27/30

(54) **RECYCLEBARE PAPIERVERPACKUNG MIT HOHER BARRIERE GEGEN WASSERDAMPF UND SAUERSTOFF**
RECYCLABLE PAPER PACKAGE WITH HIGH BARRIER AGAINST WATER VAPOUR AND OXYGEN
EMBALLAGE RECYCLABLE AVEC BARRIÈRE ÉLEVÉE CONTRE LA VAPEUR D'EAU ET L'OXYGÈNE

(30) Priorität: 18.02.2020 AT 501162020
(43) Veröffentlichungstag der Anmeldung: 26.04.2023
(62) Dokumentnummer(n) der früheren Anmeldung(en) nach Art. 76 EPÜ: 20817234.6 / 4 076 944
(73) Patentinhaber: Constantia Pirk GmbH & Co. KG, 92712 Pirk (DE)
(72) Erfinder: Grefenstein, Achim, 67122 Altrip (DE); Jones, Dudley, Bristol, BS 16-2SU (GB); Büttner, Stefan, 92318 Neumarkt i. d. Oberpf. (DE)
(74) Vertreter: Weiss Patentanwalts GmbH

(56) Entgegenhaltungen:
- DE-A1- 102017 201 449
- US-A1- 2018 304 607
- US-A1- 2019 176 455

## Beschreibung

Die gegenständliche Erfindung betrifft ein recyclebares Papierverpackungslaminat, bestehend aus einer Papierschicht mit einem Papier mit einem Flächengewicht von 30 bis 360 g/m² und einer damit verbundenen Barrierefolie, welches neben der Recylingfähigkeit gleichzeitig eine hohe Sauerstoff-, Wasserdampf und/oder Aromabarriere beinhaltet.

In der Verpackungsindustrie werden Papierverpackungslaminate verwendet, die je nach Anwendung verschiedene Eigenschaften aufweisen sollen. Solche Papierverpackungslaminate sind in der Regel mit mehrschichtigen Kunststofffolien kaschiert, die im Extrusionsverfahren, Co-Extrusionsverfahren (in beiden Fällen sowohl im Flachfolien-, als auch im Blasfolienverfahren) oder Kaschierverfahren (Verbindung einzelner Schichten mittels eines Kaschierklebstoffs), auch Mischungen davon, hergestellt werden. Im Papierverpackungslaminat können auch nicht aus Kunststoff bestehende Schichten integriert sein, beispielsweise eine Schicht aus Aluminium oder weiteren Papieren. Das Papierverpackungslaminat weist in der Regel auch eine äußere Siegelschicht auf, um das Papierverpackungslaminat durch Thermosiegeln zu einer gewünschten Verpackung, wie z.B. einem Beutel, einem Sack, eine Tüte, usw., zu verarbeiten.

Eine typische Anforderung an ein Papierverpackungslaminat ist eine Barrierefunktion gegen Wasserdampf, Sauerstoff und Aroma. Zu diesem Zweck enthält das Papierverpackungslaminat in der Regel eine Barriereschicht aus Aluminium oder einem geeigneten Barrierepolymer, wie beispielweise Ethylen-Vinylalkohol-Copolymer (EVOH) oder Polyamid (PA).

Ebenso enthält ein Papierverpackungslaminat üblicherweise auch eine Siegelschicht, um das Papierverpackungslaminat durch Thermosiegeln zu einer Verpackung verarbeiten zu können. Eine Siegelschicht ist typischerweise aus einem Polyolefin, in der Regel Polypropylen (PP) oder Polyethylen (PE) in den verschiedenen Dichten LLDPE, LDPE, MDPE oder HDPE (auch als Blend oder mehrschichtig mit gleichen oder verschiedenen Typen), ausgeführt.

Daneben können noch weitere Schichten enthalten sein, um dem Papierverpackungslaminat die gewünschten Eigenschaften, wie Zähigkeit, Steifigkeit, Reißfestigkeit, etc., zu verleihen.

Um das Papierverpackungslaminat einfach verarbeiten zu können, sollte sich das Papierverpackungslaminat beim Verarbeiten natürlich auch nicht Werfen oder Einrollen (das sogenannte Curling), weshalb bei den aufkaschierten Kunststofffolien üblicherweise symmetrische Schichtaufbauten zum Einsatz kommen.

Ferner ist es bekannt, die Eigenschaften des Papierverpackungslaminats durch eine mono- oder biaxiale Orientierung von Kunststoffschichten des Papierverpackungslaminats zu verändern. Eine solche Orientierung kann durch den Extrusionsprozess erfolgen, beispielsweise bei einem Mehrfachblasen-Extrusionsverfahren (multiple bubble process), oder erst nach dem Extrusionsprozess durch eine Dehnung (Recken) der Kunststofffolie in Maschinenrichtung (in Längsrichtung des Papierverpackungslaminats) und/oder in Querrichtung (normal auf die Längsrichtung). Durch die Orientierung der Kunststofffolie kann vor allem die Steifigkeit, Zugfestigkeit und Zähigkeit verbessert werden.

Hier ist allerdings anzumerken, dass bei der Blasfolienextrusion und Flachfolienextrusion der Extrusionsspalt (bei der Blasfolie 1,5 bis 2,5 mm) bzw. der Spalt der Extrusionsdüse deutlich größer ist, als die Enddicke der extrudierten Folie (typisch zwischen 10 bis 200 µm). Hierzu wird die extrudierte Schmelze bei Temperaturen deutlich über dem Schmelzpunkt des extrudierten Polymers gedehnt, wodurch es die endgültige Dicke erhält. Bei der Blasfolienextrusion wird die Schmelze z.B. typischerweise in Querrichtung um ca. den Faktor 2 bis 3 (das sogenannte Aufblasverhältnis) und in Längsrichtung um den Faktor 1:10 bis 1:100 (das sogenannte Abzugsverhältnis) gedehnt. Dieses Dehnen beim Extrudieren kann aber nicht mit dem Recken einer Kunststofffolie verglichen werden, da das Recken üblicherweise bei Temperaturen knapp unterhalb des Schmelzpunktes (typisch 5°C bis 20°C unterhalb) des Polymers erfolgt, um die ungeordneten Polymere und die teilkristallinen Bereiche durch das Recken in Reckrichtung bleibend auszurichten. Bei dem sogenannten MDO-Recken (nur in Maschinenrichtung) wird üblicherweise mit einem Reckspalt (Abstand der Walzen) von 40-100 mm gearbeitet. Beim biaxialen Recken findet dann anschließend eine Reckung in Querrichtung in einem beheizten Ofen statt.

Insbesondere aus ökologischen Gründen soll oftmals Papier als Verpackungsmaterial verwendet werden, weil Papier gut recycelbar ist. Aufgrund von üblichen Anforderungen an das Verpackungsmaterial, wie Barrierefunktionen gegen Wasserdampf, Sauerstoff und/oder Aroma oder Siegelfähigkeit zur Herstellung einer Verpackung, kann Papier alleine aber nicht als Verpackungsmaterial eingesetzt werden, weil Papier alleine keine signifikanten Barriereeigenschaften aufweist. Papier wird daher im Bereich der flexiblen Verpackungen meistens mit anderen Schichten wie Schichten aus Kunststoff oder Metall kombiniert, um die Barriereanforderungen zu erfüllen. Solche Papierverpackungslaminate, beispielsweise ein häufig verwendeter Papier / Aluminium / Polyethylen - Aufbau, sind aber üblicherweise aufgrund der verwendeten Materialien schwer oder gar nicht recyclebar.

In der jüngsten Zeit kommen mehr und mehr Papierverpackungen auf den Markt, welche mit nur dünnen Barriere- und Siegelschichten ausgerüstet sind, damit die nach EN 643.1 tolerierbaren Fremdanteile/Störstoffe beim Papierrecycling den dort genannten Anteil von max. 5% des Gesamtgewichts der Verpackung nicht überschreiten, siehe beispielsweise "Design Tips for Recycling" von CPI, Confederation of Paper Industry, www.wrap.org.uk/packaging. Dabei ist auch zu beachten, dass manche Beschichtungsmaterialien, wie z.B. Silikon und Wachs, und auch manche Druckfarben auch bei unter 5% als kritisch für den Recyclingprozess angesehen werden.

WO 2013/086950 A1 offenbart recyclebare Laminate mit "water-dispersable-ionomers" (WPI) als Klebern, mit welchem ein Thermoplast mit einem Basismaterial aus Paper oder Aluminium verbunden wird. Das Laminat ist recyclebar, weil durch das WPI die Papierschicht und der Thermoplast getrennt werden können, jedoch benötigt der Recyclingschritt hohe Wassertemperaturen von bevorzugt 80°C und Einwirkzeiten von bevorzugt 1 Stunde.

EP 3194164 B1 beschreibt Laminatstrukturen für Lebensmittel mit Papier als Materialschicht, Aluminium als Gassperrschicht und Polymerschichten als Laminiermaterial. Dort wird speziell auf bessere Umweltverträglichkeit durch Aussparen der Ozonbehandlung bei Oberflächenmodifikation der Polymere eingegangen.

Papierverpackungslaminate sind auch aus US 2019/176455 A1, DE 10 2017 201449 A1 oder US 2018/304607 A1 bekannt. Auf eine mögliche oder gar gewünschte Recyclingfähigkeit der Papierverpackungslaminate wird in diesen Schriften nicht hingewiesen.

Es ist eine Aufgabe der gegenständlichen Erfindung ein recyclingfreundliches Papierverpackungslaminat aus Papier mit einer hohen Barriere gegen Wasserdampf, Sauerstoff und/oder Aromen anzugeben, das einfach hergestellt werden kann und das gut recyclebar ist.

Diese Aufgabe wird dadurch gelöst, dass die Barrierefolie zumindest eine Substratschicht, Verbindungsschicht und Barriereschicht umfasst, wobei die Verbindungschicht zwischen der Substratschicht und der Barriereschicht angeordnet ist, dass die Substratschicht vorrangig aus Polyethylen oder Polypropylen besteht mit einen Polyethylen-Anteil oder einen Polypropylen-Anteil von mindestens 60 Gew% der Substratschicht 4, vorzugsweise zumindest 70 Gew% und ganz besonders vorzugsweise zumindest 80 Gew%, dass die Barriereschicht als eine Schicht aus einem Barrierepolymer ausgeführt ist und das Barrierepolymer eine Dicke von maximal 20%, vorzugsweise 5 bis 10%, der Gesamtdicke der Barrierefolie hat, dass die Verbindungsschicht eine Dicke von maximal 10% der Gesamtdicke der Barrierefolie hat, dass zumindest die zumindest eine Substratschicht der Barrierefolie gereckt ist, dass der Anteil der Papierschicht zwischen 50 Gew% und 90 Gew%, vorzugsweise zwischen 70 Gew% und 90 Gew%, des Papierverpackungslaminats beträgt und dass die Barrierefolie mit einer hydrophilen Klebeschicht mit der Papierschicht verbunden ist, wobei die der Barrierefolie zugewandte Seite der Papierschicht unbeschichtet ist. Damit werden die Funktionen (Hoch)Barriere und Recycling mit 10 bis 50 Gew%, bevorzugt 10 bis 30 Gew%, Polyolefinanteil (PE oder PP), also deutlich mehr als bisher für notwendig erachtet wurde, und einem überwiegenden Papieranteil im Papierverpackungslaminat erreicht. So kann eine recycelbare Papierverpackung mit dennoch hoher Barrierewirkung gegen Wasserdampf, Sauerstoff und/oder Aroma erzeugt werden.

Die Barrierefolie kann asymmetrisch ausgeführt sein mit einer Substratschicht, die über die Verbindungsschicht mit der Barriereschicht verbunden ist. Asymmetrische Barrierefolien können dünner ausgeführt werden, womit der Polymeranteil im Papierverpackungslaminat reduziert werden kann. In diesem Fall ist die Barriereschicht vorzugsweise der Papierschicht zugewandt angeordnet und über die Klebeschicht mit der Papierschicht verbunden.

Alternativ ist die Barrierefolie symmetrisch ausgeführt mit einer Barriereschicht, die an beiden Seiten jeweils über eine Verbindungsschicht mit einer Substratschicht verbunden ist, wobei eine der Substratschichten über die Klebeschicht mit der Papierschicht verbunden ist. Symmetrische Barrierefolien lassen einfacher verarbeiten, weil sich eine symmetrische Folie weniger curlt. Ebenso ist die Barriereschicht in einem symmetrischen Aufbau gut geschützt.

Die Barriereschicht kann als Schicht aus Polyamid oder Ethylen-Vinylalkohol-Copolymer ausgeführt sein. Zusätzlich kann die Schicht aus dem Barrierepolymer mit einer Barrierebeschichtung in Form einer Metallisierung oder Beschichtung mit Siliziumoxid oder Aluminiumoxid versehen sein, um die Barrierewirkung noch weiter zu erhöhen. Das ermöglicht es, die Barrierewirkung sehr gut an die jeweiligen Barriereanforderungen eines Papierverpackungslaminats anzupassen.

Vorzugsweise ist die Barrierefolie gereckt. Das kann beispielsweise erreicht werden indem die Barrierefolie als Ganzes co-extrudiert und anschließend gereckt wird. Zusätzlich kann durch das Recken eines Barrierepolymers auch dessen Barrierewirkung erhöht werden.

Für viele Verpackungsanwendungen ist eine Siegelschicht von Nöten, die mit der Barrierefolie an der der Papierschicht abgewandten Seite verbunden sein kann. Zur Erhöhung der Recyelfähigkeit des Papierverpackungslaminats ist es vorteilhaft, wenn die Siegelschicht aus PE besteht, wenn die Substratschicht vorrangig aus PE besteht, oder die Siegelschicht aus PP besteht, wenn die Substratschicht vorrangig aus PP besteht. Damit lassen sich Papierverpackungslaminate mit besonders reinsortigen Polymeranteil herstellen, was für die Recyclingfähigkeit günstig ist.

Vorteilhaft ist die Siegelschicht ebenfalls gereckt. Damit kann einerseits die Dicke der Siegelschicht verringert werden. Andererseits kann dadurch die Siegelschicht auch mit der Barrierefolie co-extrudiert und gereckt werden, was die Herstellung vereinfacht.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine erste Ausgestaltung eines erfindungsgemäßen Papierverpackungslaminats,
Fig.2 eine Ausführung einer asymmetrischen Barrierefolie und
Fig.3 eine Ausführung einer symmetrischen Barrierefolie.

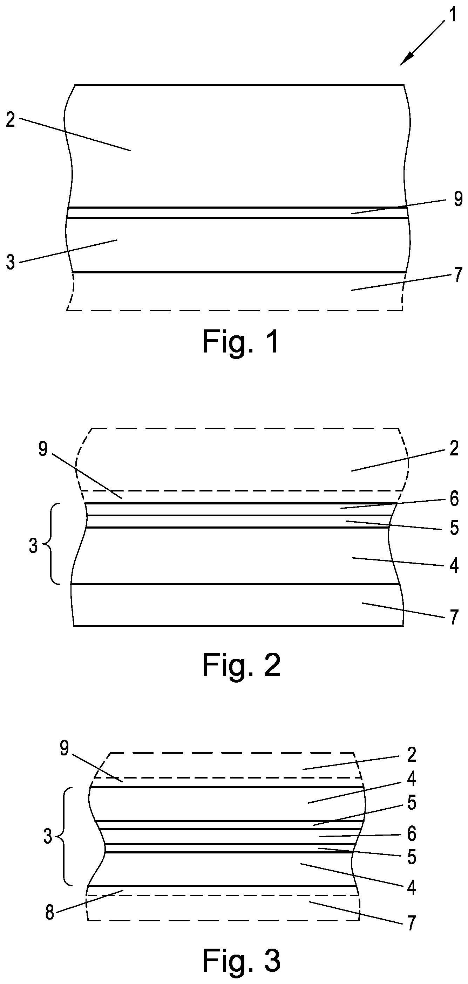

Die Fig.1 zeigt ein erfindungsgemäßes Papierverpackungslaminat 1 mit einer Papierschicht 2 und einer damit verbundenen Barrierefolie 3, die die erforderliche Barrierewirkung gegen Wasserdampf, Sauerstoff und/oder Aroma realisiert. An der der Papierschicht 2 abgewandten Seite des Papierverpackungslaminats 1 kann eine Siegelschicht 7 vorgesehen sein. Die Papierschicht 2 ist mit einer Klebeschicht 9 aus einem hydrophilen Kaschierklebstoff mit der Barrierefolie 3 verbunden. Typische Dicken des Papierverpackungslaminats 1 liegen bei 50µm bis 150µm.

Die einzelnen Schichten des Papierverpackungslaminats 1 werden nachfolgend näher erläutert.

Die Papierschicht 2 besteht aus Papier mit einem Flächengewicht von 30 bis 360g/m², bevorzugt bei flexiblen Verpackungen 30 bis 100g/m². Papier ist bekanntermaßen aus Faserstoffen, beispielsweise aus Zellstoff, Holzstoffe oder Altpapierstoff, hergestellt. Im Sinne dieser Anmeldung wird auch Pergamin als Papier verstanden.

Die Papierschicht ist auf zumindest einer Seite (die im Papierverpackungslaminat 1 der Barrierefolie 3 zugewandte Seite) unbeschichtet. Unbeschichtet bedeutet, dass das Papier an dieser Seite im Wesentlichen unbehandelt ist, insbesondere, dass kein Kunststoffmaterial auf das Papier aufgetragen ist, das in das Papier eindringen, die Papierfasern durchdringen und sich mit den Papierfasern verbinden kann. Eine solche Kunststoffbeschichtung wäre ein untrennbar mit der Papierschicht verbundener Auftrag auf dieser Seite. Konkret ist diese Seite damit beispielsweise weder mit einem Barrierelack, Siegellack oder sonstigem Lack lackiert, noch mit einer Kunststoffschicht extrusionsbeschichtet. Die in der Papierindustrie oft aufgetragenen Schichten aus Schichtsilikaten oder Mineralien (Clay-Coating) können dagegen durchaus vorhanden sein, da diese das Papierrecycling üblicherweise nicht stören.

Der im Papierverpackungslaminat 1 für die Klebeschicht 9 eingesetzte Kaschierklebstoff ist hydrophil. Ein hydrophiler Kaschierklebstoff hat eine starke Wechselwirkung mit Wasser und ist üblicherweise (aber nicht notwendigerweise) auch wasserlöslich. Ein beim erfindungsgemäßen Papierverpackungslaminat 1 eingesetzter hydrophiler Kaschierklebstoff verliert durch Wasser seine Haftung, entweder aufgrund chemischer Mechanismen, wie dem Aufbrechen von Wasserstoffbrückenbindungen, oder weil sich der Kaschierklebstoff in Wasser auflöst.

Der hydrophile Kaschierklebstoff kann auf Basis von Stärke, Zuckerderivaten, Zellulose, Aminoharz, (Poly)Acrylat, Polyvinylalkohol (PVOH), Polyvinylazetat, Polyacrylsäure, maleinsäuremodifizierten Ethylen-Copolymeren, Methylzellulose, Carboxymethylcellulose, Carboxyfunktionelle Polyester, Polyethylen-Succinat, Polybutylen-Succinat, lonomeren oder hydrophilem Polyurethan hergestellt sein.

Ebenfalls einsetzbar sind hydrophile Kaschierklebstoff zur Extrusionskaschierung, wie beispielsweise aber nicht abschließend, ein Ethylencopolymer mit polaren Gruppen enthaltenden Comonomeren, wie z.B. Ethylen-Vinylacetat-Copolymer (EVA), Ethylen-Butylacrylat (EBA), Ethylen-Acrylsäure-Copolymer (EAA), oder ein mit Maleinsäureanhydrid gepfropftes Polyethylen/Polypropylen (PE-G-Mah, PP-G-Mah).

Der Kaschierklebstoff wird natürlich so gewählt, dass eine ausreichende Haftung zwischen der Papierschicht 2 und der Barrierefolie 3 entsteht, um eine unerwünschte Delamination des Papierverpackungslaminat 1 bei Verwendung zu verhindern. Mit der Klebeschicht 9 soll vorzugsweise eine Verbundhaftung zwischen der Papierschicht 2 und der Barrierefolie 3 von zumindest 1N/15mm, vorzugsweise zumindest 1,5N/15mm, erreicht werden.

Die Verbundhaftung wird mit einem Schälversuch ermittelt. Bei einem Schälversuch wird ein Teststreifen des Papierverpackungslaminats 1 an freien Enden der Papierschicht 2 und der Barrierefolie 3 auseinandergezogen. Die freien Enden werden dabei in einer Zugmaschine eingespannt und in einem vorgegebenen Abzugswinkel (z.B. 90°) auseinandergezogen und dabei die Kraft gemessen. Bei einer Breite des Teststreifens von 15mm erhält man die Angabe der Verbundhaftung mit x N/15mm. Die Angabe der Verbundhaftung ist hierbei der nahezu konstante Schälwert (Peelwert) und nicht der maximale Anreißwert, der am Beginn des Schälversuches als Kraftspitze auftritt. In der Regel werden zur Ermittlung der Verbundhaftung auch eine Anzahl von Schälversuchen durchgeführt und die gesuchte Verbundhaftung als Mittelwert aus den einzelnen Messungen ermittelt. Der Schälversuch wird beispielsweise nach der Norm ASTM F904 durchgeführt.

Aufgrund der Verwendung von Papier im Papierverpackungslaminat 1 kann zur Herstellung der Klebeschicht 9 zwischen Papierschicht 2 und Barrierefolie 3 ein flüssiger Kaschierklebstoff verwendet werden, insbesondere ein in Wasser oder einem geeigneten Lösemittel gelöster Kaschierklebstoff. Nach dem Auftrag des flüssigen Kaschierklebstoffes und nach dem Zusammenführen der Papierschicht 2 und Barriereschicht 3 wird der Kaschierklebstoff getrocknet, wobei das Wasser oder Lösemittel durch das Papier diffundieren kann. Nach dem Trocknen bleibt die Klebeschicht 9 unter Herstellung einer Verbindung zwischen der Papierschicht 2 und Barrierefolie 3 zurück. Es können aber zur Herstellung der Klebeschicht 9 auch nicht flüssige Kaschierklebstoff verwendet werden, solange diese hydrophil sind.

Ebenso ist eine Extrusionskaschierung denkbar, bei der der geschmolzene Kaschierklebstoff auf die Papierschicht 2 oder die Barrierefolie 3, oder auch auf beide, schmelzflüssig bei hohen Temperaturen von oberhalb 180°C extrudiert wird und danach die Papierschicht 2 und Barrierefolie 3 zusammengeführt werden. Nach dem Erstarren des Kaschierklebstoff bildet dieser die Klebeschicht 9 aus.

Die Barrierefolie 3 besteht aus zumindest einer gereckten Substratschicht 4 aus vorrangig Polytehylen (PE) oder vorrangig Polypropylen (PP), einer Verbindungsschicht 5 und einer Barriereschicht 6 (Fig.2). Die Dicke der Barrierefolie 3 beträgt typischerweise 10 - 40µm.

Die Barrierefolie 3 kann asymmetrisch ausgeführt sein (wie in Fig.2) mit einer Substratschicht 4, einer Barriereschicht 6 und einer dazwischen angeordneten Verbindungsschicht 5, wobei die Verbindungsschicht 5 direkt mit der Substratschicht 4 und der Barriereschicht 6 verbunden ist. Bei einer asymmetrischen Barrierefolie 3 ist die Barriereschicht 6 im Papierverpackungslaminat 1 vorzugsweise der Papierschicht 2 zugewandt angeordnet und mit der Klebeschicht 9 direkt mit der unbeschichteten Seite der Papierschicht 2 verbunden, kann aber auch der Siegelschicht 7 zugewandt sein. Die Barrierefolie 3 kann aber auch symmetrisch ausgeführt sein (wie in Fig.3). In diesem Fall wäre die Barriereschicht 6 an beiden Seiten über jeweils eine Verbindungsschicht 5 mit jeweils einer Substratschicht 4 (die auch unterschiedlich sein können) verbunden. Bei einer symmetrischen Ausführung ist die unbeschichtete Seite der Papierschicht 2 über die Klebeschicht 9 direkt mit einer Substratschicht 4 der Barrierefolie 3 verbunden.

In einer nicht erfindungsgemäßen Ausgestaltung ist die Barriereschicht 6 eine auf die Verbindungsschicht 5 aufgebrachte Barrierebeschichtung in Form einer Metallisierung, beispielsweise mit Aluminium, oder eine Beschichtung aus Silziumoxid (SiOx) oder Aluminiumoxid (AlOx). Diese Ausgestaltung kommt vorzugsweise bei einer asymmetrischen Barrierefolie 3 zur Anwendung. Durch die Barrierebeschichtung bildet sich auf der Verbindungsschicht 5 eine nur wenige Nanometer (typischerweise etwa 10 bis 50nm) dünne Barriereschicht 6 aus. Die Metallisierung kann beispielsweise durch eine bekannte Vakuummetallisierung erfolgen. Die SiOx oder AlOx Beschichtung kann beispielsweise mit einem chemischen Gasphasenabscheidungsverfahren oder durch Verdampfung im Vakuum aufgebracht werden. Natürlich sind auch andere Verfahren zur Herstellung der Barrierebeschichtung möglich. Die Barrierebeschichtung kann auch zusätzlich mit einem Schutzlack überzogen werden als Schutz gegen Microcracking, was die Barrierefunktion beeinträchtigen kann. Mit einer solchen Barrierebeschichtung kann eine niedrige Sauerstoffpermeation (oxygen transmission rate, OTR) von kleiner 2 cm³/m²/d (bei 23°C, 75% relativer Feuchtigkeit beidseitig) und eine niedrige Wasserdampfpermeation (water vapour transmission rate, WVTR) von kleiner 3 cm³/m²/d (bei 38°C, 90% relativer Feuchtigkeit beidseitig) erreicht werden, wobei d für Tag, also 24 Stunden, steht.

In einer erfindungsgemäßen Ausgestaltung ist die Barriereschicht 6 eine Schicht aus einem Barrierepolymer (sowohl bei asymmetrischen als auch bei symmetrischen Barrierefolien 3 verwendet), also einem Polymer mit einer ausreichenden Barriereeigenschaft, insbesondere gegen Sauerstoff und/oder Aroma. Das Barrierepolymer ist vorzugsweise ein Polyamid (PA) oder ein Ethylen-Vinylalkohol-Copolymer (EVOH). Bevorzugt wird EVOH als Barrierepolymer verwendet. Das Barrierepolymer hat eine Dicke von maximal 20%, vorzugsweise 5 bis 10%, der Gesamtdicke der Barrierefolie 3, also beispielsweise maximal 2 bis 8µm bei einer Dicke der Barrierefolie von 10 - 40µm. Mit einem Barrierepolymer als Barriereschicht 6 kann nicht nur eine niedrige Wasserdampfpermeation (ähnlich oder besser wie oben) erzielt werden, sondern auch eine niedrige Sauerstoffpermeation (oxygen transmission rate, OTR) von kleiner 2 cm³/m²/d (bei 23°C, 75% relativer Feuchtigkeit beidseitig) und eine hohe Aromabarriere erreicht werden. Für die Aromabarriere gibt es kein objektives Maß, sondern die Wirkung als Aromabarriere wird subjektiv durch Geruchsprüfungen festgestellt.

Falls in der Barrierefolie 3 eine Barriereschicht 6 aus einem Barrierepolymer vorgesehen ist, kann die Barriereschicht 6 in einer asymmetrischen oder symmetrischen Barrierefolie 3 zusätzlich mit einer Barrierebeschichtung beschichtet sein, insbesondere metallisiert, beispielsweise mit Aluminium, oder mit einer Aluminiumoxid oder Siliziumoxid Beschichtung. Damit kann die Barrierewirkung der Barrierefolie 3 noch weiter erhöht werden, insbesondere können OTR und WVTR damit noch deutlich weiter gesenkt werden, nämlich auf kleiner als jeweils 1 cm³/m²/d. Auch in dieser Ausführung könnte die Barrierebeschichtung zusätzlich mit einem Schutzlack überzogen werden.

Die Substratschicht 4 ist vorrangig aus einem Polyethylen (PE) oder Polypropylen (PP) hergestellt, jeweils mit einen Polyethylen-Anteil oder einen Polypropylen-Anteil von mindestens 60 Gew% der Substratschicht 4, vorzugsweise zumindest 70 Gew% und ganz besonders vorzugsweise zumindest 80 Gew%. Je höher der Polyethylen-Anteil oder Polypropylen-Anteil ist (also je reinsortiger die Substratschicht 4 wird), umso besser wird die Recycelbarkeit. Die Dicke einer Substratschicht 4 beträgt vorzugsweise 5 bis 35µm, wobei in einer symmetrischen Barrierefolie 3 auch unterschiedlich dicke und/oder unterschiedlich aufgebaute Substratschichten 4 eingesetzt werden können. Allerdings sind in einem symmetrischen Aufbau vorzugsweise beide Substratschichten 4 mit dem gleichen Hauptbestandteil, PE oder PP, ausgeführt. Der Substratschicht 4 können übliche Additive (wie Slipadditive, Antiblockadditive, Füllstoffe, usw.) zugesetzt sein. In der Substratschicht 4 können auch verschiedene Polyethylentypen oder Polypropylentypen eingesetzt werden, jeweils als Mischung oder Coextrudat. Ebenso kann die Substratschicht 4 neben dem jeweiligen Hauptbestandteil PE oder PP ein jeweils dazu kompatibles Polyolefin-Material umfassen.

Als Polyethylentypen in der Substratschicht 4 kommen beispielsweise HDPE (Polyethylen hoher Dichte mit einer Dichte zwischen 0,94-0,97g/cm³), MDPE (Polyethylen mittlerer Dichte), LDPE (Poylethylen niedriger Dichte mit einer Dichte zwischen 0,915-0,935g/cm³), LLDPE (lineare Polyethylen niedriger Dichte mit einer Dichte zwischen 0,87-0,94g/cm³) oder mLLDPE (lineares Metallocene Polyethylen niedriger Dichte) in Frage. Bevorzugt kommen HDPE oder MDPE zum Einsatz. Als Polyproylentypen in der Substratschicht 4 kommen beispielsweise ein ataktisches, syndiotaktisches oder isotaktisches PP in Frage.

Als zu PE kompatibles Polyolefin-Material kommen grundsätzlich jegliche Arten von Polyethylenen in Frage, insbesondere auch Ethylen-Copolymere, wie beispielsweise Ethylen-Vinylacetat-Copolymer (EVA), Methacrylsäureethylester (EMA), Ethylen/Acrylsäure-Copolymer (EAA) oder Ethylen-Butylacrylat-Copolymer (EBA). Ebenso kann als zu PE kompatibles Polyolefin-Material auch Polypropylen (PP) oder ein Cycloolefin-Copolymer (COC) im Ausmaß von maximal 20 Gew% verwendet werden. Im Falle vom PP wird vorzugsweise ein Polypropylen-Random-Copolymer mit Ethylen als Comonomer (üblich 5 bis 15%), ein Polypropylen-Copolymer mit Ethylen oder ein Polypropylen-Homopolymer, das mit linearen PE-Typen, wie mLLDPE, LLDPE oder HDPE ausreichend kompatibel ist, verwendet, um eine zumindest begrenzte Recycelfähigkeit zu erzielen.

Als zu PP kompatibles Polyolefin-Material kommen PP-Copolymere, wie Randomcopolymere und Blockcopolymere, in Frage. Eine Zugabe von bis zu 20% Polyethylen beeinträchtigt die Recyclierbarkeit ebenso kaum.

Sind in der Substratschicht 4 zu PE oder PP kompatible Polyolefin-Materialien enthalten, dann beträgt der Anteil am Hauptbestandteil Polyethylen (PE) oder Polypropylen (PP) in der Substratschicht 4 vorzugsweise mindestens 60 Gew% (bezogen auf die Substratschicht 4), vorzugsweise zumindest 70 Gew% und ganz besonders vorzugsweise zumindest 80 Gew%, um die Recycelfähigkeit zu verbessern. Das PE oder PP und das jeweils dazu kompatible Polyolefin-Material können dabei in der Substratschicht 4 als Mischung vorliegen.

Die Substratschicht 4 kann aber auch mehrschichtig (extrudiert oder co-extrudiert) aufgebaut sein mit einer (oder auch mehrerer) PE oder PP Schicht(en) und einer (oder auch mehrerer) Schicht(en) aus dem kompatiblen Polyolefin-Material.

Zum Hauptbestandteil PE oder PP der Substratschicht 4 kann auch ein Kavitierungsmittel hinzugefügt sein, wobei das Kavitierungsmittel in einer Menge von 5 - 30 Gew%, vorzugsweise 15 - 25 Gew%, der Substratschicht 4 hinzugefügt wird. Als Kavitierungsmittel kommt ein zu PE oder PP inkompatibles Polymer (also ein Polymer, das in der PE oder PP Matrix isoliert bleibt), beispielsweise Polyamide (PA), Polyester (z.B. PET oder PBT), Polylactide (PLA), in Frage. Ebenso kann bevorzugt ein mineralisches Kavitierungsmittel, wie beispielsweise Kalziumcarbonat oder Glimmer verwendet werden. Das Kavitierungsmittel liegt üblicherweise als feines Pulver vor, das vor dem Extrudieren als Masterbatch in einer PE- oder PP-Matrix eingebettet und mit dem PE oder PP Granulat gemischt wird.

Bei Verwendung einer kavitierten PE- oder PP-Schicht in der Substratschicht 4 ist diese vorzugsweise auf einer oder beiden Seiten von einer nicht kavitierten PE- oder PP-Schicht umgeben. Ein denkbarer Aufbau der Substratschicht 4 der Laminatschicht 3 wäre beispielsweise eine kavitierte PE-Schicht, die an einer Seite mit einer nicht kavitierten PE-Schicht verbunden ist (z.B. coextrudiert), wobei die kavitierte PE-Schicht im Papierverpackungslaminat 1 der Papierschicht 2 zugewandt wäre. Ein anderer bevorzugter Aufbau der Substratschicht 4 wäre beispielsweise eine kavitierte PE-Schicht, die an beiden Seiten mit einer nicht kavitierten PE-Schicht verbunden ist (z.B. coextrudiert). Ebenso ergeben sich solche Aufbauten mit PP als Hauptbestanteil in der Substratschicht 4. Die Verwendung einer kavitierten Schicht in der Substratschicht 4 kann auch die Siegeleigenschaften des Papierverpackungslaminats 1 verbessern.

Die Summe aus PE oder PP, Kavitierungsmittel, allfälligen Additiven und möglichen kompatiblen Polyolefin-Materialen in der Substratschicht 4 kann natürlich gemeinsam nur 100 Gew% ergeben. Maßgebend ist dabei der Anteil am Hauptbestandteil Polyethylen oder Polypropylen, an den sich die anderen Anteile richten müssen.

Zumindest die Substratschicht 4 in der Barrierefolie 3 ist uni- oder bidirektional, also in Maschinenrichtung (MDO) (in der Regel die Längs- oder Extrusionsrichtung) und/oder in Querrichtung (TDO) (90° verdreht zur Maschinenrichtung), gereckt. Bei Verwendung eines Barrierepolymers als Barriereschicht 6 in der Barrierefolie 3 wird vorzugsweise die gesamte Barrierefolie 3 gereckt. Im Fall einer Beschichtung der Verbindungsschicht 5 oder der Barriereschicht 6 wird vor der Beschichtung gereckt. Der Reckgrad in Maschinenrichtung und in Querrichtung muss dabei nicht gleich sein. Der Reckgrad in Maschinenrichtung beträgt dabei vorzugsweise zumindest 4:1 bis 8:1. Der Reckgrad in Querrichtung beträgt dabei vorzugsweise zumindest 5:1 bis 10:1. Bevorzugt ist eine unidrektionale MDO Reckung, weil ein unidirektionals Recken einfacher ist, als ein bidirektionales.

Durch das Recken der Barrierefolie 3 oder zumindest der Substratschicht 4 der Barrierefolie 3 kann der Gewichtsanteil des Polyolefins (PE oder PP) im Papierverpackungslaminat 1 geringgehalten werden, da erst durch das Recken eine dünne aber dennoch steife Folie erzeugt werden kann.

Bekanntermaßen kann durch Recken eines Barrierepolymers auch die Barrierewirkung deutlich erhöht werden. Durch das Recken des Barrierepolymers werden im Vergleich zu ungereckten gleichartigen Barrierepolymeren ca. drei- bis vierfach erhöhte Barrierewerte erzielt, wodurch weniger teures Barrierepolymere bei gleicher Barrierewirkung zum Einsatz kommen kann. Dadurch können auch die Kosten des Papierverpackungslaminats 1 deutlich gesenkt werden.

Die Verbindungsschicht 5 dient zum Verbinden der Barriereschicht 6 und der Substratschicht 4. Hierbei soll eine ausreichende Verbundhaftung erreicht werden, insbesondere um eine unerwünschte Delamination der Barrierefolie 3 sicher zu verhindern. Geeignete polare Verbindungsschichten 5 bestehen vorzugsweise aus Polymeren mit erhöhter Polarität, beispielsweise auf Basis von mit Maleinsäureanhydrid gepfropfte Polyolefinen (wie PE oder PP), Ethylen-Vinylacetat-Copolymer (EVA), Ethylen/Acrylsäure-Copolymer (EAA), Ethylen-Butylacrylat-Copolymer (EBA), oder ähnliche Polyolefincopolymere. Das Material der Verbindungsschicht 5 wird vorzugsweise entsprechend dem Hauptbestandteil der Substratschicht 4 ausgewählt. Die Dicke der Verbindungsschicht 5 beträgt maximal 10% der Gesamtdicke der Barrierefolie 3, beispielsweise 1 bis 5µm bei einer Dicke der Barrierefolie 3 von 10 - 40µm.

Die Siegelschicht 7 ist vorzugsweise ein Polyethylen, beispielsweise LLDPE, LDPE, MDPE oder HDPE, wenn der Hauptbestandteil der Substratschicht 4 ein PE ist. Auch Mischungen verschiedener PE-Typen in der Siegelschicht 7 sind denkbar, genauso wie eine mehrschichtige Siegelschicht 7 aus gleichen oder verschiedenen PE-Typen. Ist der Hauptbestandteil der Substratschicht 4 ein Polypropylen, so ist die Siegelschicht 7 vorzugsweise ein Polypropylen, beispielsweise ein ungerecktes PP (CPP). Auch in diesem Fall kann die Siegelschicht 7 eine Mischung verschiedener PP sein und/oder mehrschichtig aufgebaut sein. Die Dicke der Siegelschicht 7 sollte im Sinne der besseren Recycelbarkeit möglichst gering sein, insbesondere weniger als 50µm, bevorzugt weniger als 30µm.

Auch zwischen der Barrierefolie 3 und der Siegelschicht 7 kann bedarfsweise eine Verbindungschicht 8 (angedeutet in Fig.3), beispielsweise wie oben erwähnt, vorgesehen sein, um die Haftung zu verbessern.

Damit das Papierverpackungslaminat 1 gut recyclebar ist, soll der Polymeranteil Papierverpackungslaminat 1 (im Wesentlichen Barrierefolie 3 und falls vorhanden Siegelschicht 7) zwischen 10 Gew% und 50 Gew% des Papierverpackungslaminats 1 ausmachen, vorzugsweise maximal 30 Gew%, besonders vorzugsweise maximal 20 Gew%. Damit verfolgt das erfindungsgemäße Papierverpackungslaminat 1 einen anderen Ansatz als die Empfehlung im Stand der Technik, in dem gefordert wird, den Polymeranteil unter 5 Gew% zu halten. Um trotzdem die gute Recycelbarkeit zu erreichen, ist die Papierschicht 2 an der der Barrierefolie 3 zugewandten Seite unbeschichtet und mit der Barrierefolie 3 mit einer hydrophilen Klebeschicht 9 verbunden.

Beim Recyceln des Papierverpackungslaminats 1 wird dieses, üblicherweise nach einer mechanischen Zerkleinerung, in Wasser bei einer bestimmten Wassertemperatur und für eine bestimmte Zeit eingeweicht (Pulpprozess). Aufgrund der Eigenschaften des erfindungsgemäßen Papierverpackungslaminats 1 kann sich die Papierschicht 2 während des Pulpprozesses beim Recycling von der Barrierefolie 3, samt aller Schichten und potentiellen Störstoffe für das Papierrecycling, ablösen. Die hydrophile Klebeschicht 9 reagiert beim Pulpprozess mit dem Wasser und verliert dabei die Hafteigenschaften oder löst sich gänzlich in Wasser auf, sodass die Papierschicht 2 von der Barrierefolie 3 getrennt wird.

Die Papierschicht 2 kann sich damit im Wasser auflösen und eine Pulpe bilden, aus der wiederum Recyclingpapier hergestellt werden kann. Für das Recyceln des Papierverpackungslaminats 1 ist es vorteilhaft, wenn die Klebeschicht 9 bei einer Wassertemperatur von 40°C innerhalb von maximal 20 Minuten, vorzugsweise maximal 10 Minuten, insbesondere vorzugsweise maximal 5 Minuten, die Haftung ausreichend verliert oder sich auflöst, sodass sich die Papierschicht 2 und die Barrierefolie 3 mit der Siegelschicht 7 leicht trennen.

Da die Metallisierung (sofern vorgesehen) nach der Abtrennung während des Pulpprozesses im Papierrecycling auf der abgelösten Barrierefolie 3 verbleibt, kommt es nicht zu einer Vergrauung des recycelten Papiers, was bei einer Barrieremetallisierung einer Papieroberfläche zwangsweise passieren würde.

Die von der Papierschicht 2 im Papierrecycling getrennte Barrierefolie 3, gegebenenfalls mit der Siegelschicht 7, kann einem weiteren Recyclingprozess zugeführt werden, um das darin enthaltene Polyolefin (Hauptbestandteil PE oder PP) wiederverwerten zu können. Durch die möglichst reinsortige Ausführung der Barrierefolie 3 und der Siegelschicht 7 mit dem Hauptbestandteil entweder PE oder PP und dazu kompatiblen Materialien kann auch die Barrierefolie 3, gegebenenfalls mit der Siegelschicht 7, mit gängigen Methoden im mechanischen Recycling einfach und kostengünstig wiederverwertet werden. Durch die geringe Dicke der Barriereschicht 6 in der Barrierefolie 3 (sofern vorgesehen) wird die Recyclingfreundlichkeit des aus der Pulpe des Papierrecyclings abgeführten Polyolefinstromes nicht beeinträchtigt.

Die Barrierefolie 3 wird vorteilhafterweise durch Co-Extrusion hergestellt, weil das eine besonders einfache, kostengünstige Herstellung ermöglicht. Vorzugsweise kommt das bekannte Blasfolien- oder Flachfolienextrusionsverfahren zum Einsatz. Hierbei werden die einzelnen Schichten eines symmetrischen oder asymmetrischen Schichtaufbaus wie oben beschrieben (also Substratschicht(en) 4 und Verbindungsschicht(en) 5 und gegebenenfalls auch Barriereschicht 6 aus Barrierepolymer) der Barrierefolie 3, bis auf eine mögliche Beschichtung, vorzugsweise in einem Gang coextrudiert. Dieses Laminat wird nach der Co-Extrusion uni- oder bidirektional gereckt. Nach dem Recken kann auch noch eine Barrierebeschichtung aufgebracht werden, entweder als Barriereschicht 6 auf der Verbindungsschicht 5 oder auf dem Barrierepolymer der Barriereschicht 6.

Die Barrierefolie 3 kann auch in einem Gang mit der Siegelschicht 7 co-extrudiert werden. In diesem Fall wird auch die Siegelschicht 7 mit der Barrierefolie 3 gereckt. Alternativ kann die Siegelschicht 7 mit der gereckten Barrierefolie 3 verbunden werden, entweder durch Extrusionskaschierung (Extrudieren der Siegelschicht 7 auf die Barrierefolie 3) oder in einem Kaschierverfahren (Verbinden der Barrierefolie 3 mit der Siegelschicht 7 mit einem Kaschierklebstoff). Beim Kaschieren der Siegelschicht 7 kann auch eine gereckte Siegelschicht 7 verwendet werden.

Besonders bevorzugt wird die Siegelschicht 7 bei der Herstellung an der der Barriereschicht 6 gegenüberliegenden Seite der Barrierefolie 3 direkt in die Barrierefolie 3 integriert, beispielsweise durch Co-Extrusion. Damit kann die Siegelschicht 7 dünner ausgeführt werden und der Gesamtanteil an Polymer im Papierverpackungslaminat 1 geringer werden, als bei einer nachträglich aufgebrachten Siegelschicht 7. Abgesehen davon vereinfacht sich dadurch auch die Herstellung.

Das Recken der Barrierefolie 3 (gegebenenfalls mit der Siegelschicht 7) kann dabei in-line (also unmittelbar nach der Co-Extrusion) oder off-line (also zu einem späteren Zeitpunkt nach der Co-Extrusion) erfolgen. Dabei kann beim bidirektionalen Recken zuerst in Maschinenrichtung gereckt werden und anschließend in Querrichtung, oder ebenso ist es denkbar in beide Richtungen gleichzeitig zu recken. Das Recken findet typischerweise ca. 10°C bis 30°C, typisch ca. 20°C, unterhalb der niedrigsten Schmelztemperatur eines Kunststoffes in der Barrierefolie 3 oder gegebenenfalls auch Siegelschicht 7 (bei HDPE ca. bei 128°C bis 130°C) statt. Das Recken findet jedenfalls vor einer möglichen Beschichtung der Barriereschicht 6 und/oder der Verbindungsschicht 5 statt.

Durch das uni- oder bidirektionale Recken entstehen im Falle eines kavitierten PE oder PP in der Substratschicht 4 in bekannter Weise aufgrund des Kavitierungsmittels Mikrokavitäten im PE oder PP. Dabei wurde festgestellt, dass durch die Mikrokavitäten die Dichte der Substratschicht 4 deutlich gesenkt werden konnte, auf Werte zwischen 0,4 - 0,85g/cm³. Die Barrierefolie 3 kann damit leichter gemacht werden, was den Polymeranteil weiter absenkt.

Die Papierschicht 2 wird mit der Barrierefolie 3, gegebenenfalls mit Siegelschicht 7, kaschiert. Dazu kann der hydrophile Kaschierklebstoff entweder auf der Papierschicht 2 oder der Barrierefolie 3, oder auch auf beiden, in flüssiger Form aufgetragen werden, beispielsweise mittels Rollen- oder Druckauftrag oder durch Sprühen. Danach werden die Papierschicht 2 und die Barrierefolie 3 aneinandergedrückt, beispielsweise zwischen zwei Rollen, um das Papierverpackungslaminat 1 herzustellen. Der Kaschierklebstoff kann dann bei Bedarf zur Ausbildung der Kleberschicht 9 getrocknet werden, beispielsweise durch Durchführung durch einen Wärmetunnel.

Alternativ kann die Papierschicht 2 und die gereckte Barrierefolie 3 bei Verwendung eines geeigneten Kaschierklebstoffes mit einem Extrusionskaschierverfahren verbunden werden. Beim Extrusionskaschieren wird der geschmolzene Kaschierklebstoff auf die Papierschicht 2 oder die Barrierefolie 3, oder auch auf beide, extrudiert und danach die Papierschicht 2 und Barrierefolie 3 aneinandergedrückt, beispielsweise zwischen zwei Rollen, um das Papierverpackungslaminat 1 herzustellen. Danach kann der Kaschierklebstoff abkühlen, was durch gekühlte Walzen üblicherweise unterstützt werden kann.

Eine Siegelschicht 7 des Papierverpackungslaminats 1 könnte auch nach der Kaschierung der Papierschicht 2 und der Barrierefolie 3 kaschiert werden.

In einer beispielhaften Ausgestaltung wird eine Barrierefolie 3 mit einer Dicke von 10 - 40µm verwendet mit einer Substratschicht 4 mit Hauptbestandteil PE (mindestens 60 Gew% PE-Anteil), vorzugsweise HDPE, die mindestens 60% der Dicke der gereckten Barrierefolie 3 ausmacht. Als Verbindungsschicht 5 wird ein polares PE- oder PP-Material (je nach Hauptbestandteil der Substratschicht 4) verwendet. Mit der Verbindungsschicht 5 ist eine Barriereschicht 6 aus EVOH (Barrierepolymer) verbunden. Die Barrierefolie 3 wird co-extrudiert und danach unidirektional oder bidirektional gereckt. Zusätzlich kann das Barrierepolymer nach dem Recken mit einer Barrierebeschichtung (Metallisierung, SiOx oder AIOx) beschichtet sein. In einer alternativen Ausgestaltung wird auf die gereckte Substratschicht 4 mit Verbindungsschicht 5 eine Barrierebeschichtung aufgebracht. Die, zumindest teilweise, gereckte Barrierefolie 3 ist mit einer Klebeschicht 9 aus einem hydrophilen Kaschierklebstoff mit einer Papierschicht 2 verbunden. Zusätzlich kann an der der Papierschicht abgewandten Seite des Papierverpackungslaminats 1 eine Siegelschicht 7 aus einem PE-Material vorgesehen sein.

## Patentansprüche

1. Recylingfähiges Papierverpackungslaminat bestehend aus einer Papierschicht (2) mit einem Papier mit einem Flächengewicht von 30 bis 360 g/m² und einer damit verbundenen Barrierefolie (3), **dadurch gekennzeichnet, dass** die Barrierefolie (3) zumindest eine Substratschicht (4), Verbindungsschicht (5) und Barriereschicht (6) umfasst, wobei die Verbindungschicht (5) zwischen der Substratschicht (4) und der Barriereschicht (6) angeordnet ist, **dass** die Substratschicht (4) vorrangig aus Polyethylen oder Polypropylen besteht mit einen Polyethylen-Anteil oder einen Polypropylen-Anteil von mindestens 60 Gew% der Substratschicht (4), vorzugsweise zumindest 70 Gew% und ganz besonders vorzugsweise zumindest 80 Gew%, **dass** die Barriereschicht (6) als eine Schicht aus einem Barrierepolymer ausgeführt ist und das Barrierepolymer eine Dicke von maximal 20%, vorzugsweise 5 bis 10%, der Gesamtdicke der Barrierefolie (3) hat, **dass** die Verbindungsschicht (5) eine Dicke von maximal 10% der Gesamtdicke der Barrierefolie (3) hat, **dass** zumindest die zumindest eine Substratschicht (4) der Barrierefolie (3) gereckt ist, **dass** der Anteil der Papierschicht (2) zwischen 50 Gew% und 90 Gew%, vorzugsweise zwischen 70 Gew% und 90 Gew%, des Papierverpackungslaminats (1) beträgt **und dass** die Barrierefolie (3) mit einer hydrophilen Klebeschicht (9) mit der Papierschicht (2) verbunden ist, wobei die der Barrierefolie (3) zugewandte Seite der Papierschicht (2) unbeschichtet ist.

2. Recylingfähiges Papierverpackungslaminat nach Anspruch 1, **dadurch gekennzeichnet, dass** die Barrierefolie (3) asymmetrisch ausgeführt ist mit einer Substratschicht (4), die über die Verbindungsschicht (5) mit der Barriereschicht (6) verbunden ist.

3. Recylingfähiges Papierverpackungslaminat nach Anspruch 2, **dadurch gekennzeichnet, dass** die Barriereschicht (6) der Papierschicht (2) zugewandt angeordnet ist und über die Klebeschicht (9) mit der Papierschicht (2) verbunden ist.

4. Recylingfähiges Papierverpackungslaminat nach Anspruch 1, **dadurch gekennzeichnet, dass** die Barrierefolie (3) symmetrisch ausgeführt ist mit einer Barriereschicht (6), die an beiden Seiten jeweils über eine Verbindungsschicht (5) mit einer Substratschicht (4) verbunden ist und eine der Substratschichten (4) über die Klebeschicht (9) mit der Papierschicht (2) verbunden ist.

5. Recylingfähiges Papierverpackungslaminat nach einem der Ansprüche 1 bis 4, **dadurch gekennzeichnet, dass** die Barriereschicht (6) als eine Schicht aus Polyamid oder Ethylen-Vinylalkohol-Copolymer ausgeführt ist.

6. Recylingfähiges Papierverpackungslaminat nach Anspruch 5, **dadurch gekennzeichnet, dass** die Schicht aus dem Barrierepolymer mit einer Barrierebeschichtung in Form einer Metallisierung oder Beschichtung mit Siliziumoxid oder Aluminiumoxid versehen ist.

7. Recylingfähiges Papierverpackungslaminat nach Anspruch 5, **dadurch gekennzeichnet, dass** die Barrierefolie (3) gereckt ist.

8. Recylingfähiges Papierverpackungslaminat nach einem der Ansprüche 1 bis 7, **dadurch gekennzeichnet, dass** die Barrierefolie (3) an der der Papierschicht (2) abgewandten Seite mit einer Siegelschicht (7) verbunden ist.

9. Recylingfähiges Papierverpackungslaminat nach Anspruch 8, **dadurch gekennzeichnet, dass** die Siegelschicht (7) aus Polyethylen besteht, wenn die Substratschicht (4) vorrangig aus Polyethylen besteht, oder die Siegelschicht (7) aus Polypropylen besteht, wenn die Substratschicht (4) vorrangig aus Polypropylen besteht.

10. Recylingfähiges Papierverpackungslaminat nach Anspruch 8 oder 9, **dadurch gekennzeichnet, dass** die Siegelschicht (7) gereckt ist.

## Claims

1. Recyclable paper packaging laminate consisting of a paper layer (2) having a paper with a grammage of 30 to 360 g/m² and a barrier film (3) joined thereto, **characterized in that** the barrier film (3) has at least one substrate layer (4), a joining layer (5), and a barrier layer (6), wherein the joining layer (5) is arranged between the substrate layer (4) and the barrier layer (6), **in that** the substrate layer (4) consists predominantly of polyethylene or polypropylene with a polyethylene content or a polypropylene content of at least 60 wt.% of the substrate layer (4), preferably at least 70 wt.%, and very particularly preferably at least 80 wt.%, **in that** the barrier layer (6) is designed as a layer made of a barrier polymer and the barrier polymer has a thickness of maximum 20%, preferably 5 to 10%, of the total thickness of the barrier film (3), **in that** the joining layer (5) has a thickness of maximum 10% of the total thickness of the barrier film (3), **in that** at least the at least one substrate layer (4) of the barrier film (3) is stretched, **in that** the content of the paper layer (2) is between 50 wt.% and 90 wt.%, preferably between 70 wt.% and 90 wt.%, of the paper packaging laminate (1), **and in that** the barrier film (3) is joined to the paper layer (2) by a hydrophilic adhesive layer (9), wherein the side of the paper layer (2) facing the barrier film (3) is uncoated.

2. Recyclable paper packaging laminate according to claim 1, **characterized in that** the barrier film (3) is designed asymmetrically with a substrate layer (4) which is joined to the barrier layer (6) via the joining layer (5).

3. Recyclable paper packaging laminate according to claim 2, **characterized in that** the barrier layer (6) is arranged to face the paper layer (2) and is joined to the paper layer (2) via the adhesive layer (9).

4. Recyclable paper packaging laminate according to claim 1, **characterized in that** the barrier film (3) is designed symmetrically with a barrier layer (6) which is joined on both sides to a substrate layer (4) via a joining layer (5), and one of the substrate layers (4) is joined to the paper layer (2) via the adhesive layer (9).

5. Recyclable paper packaging laminate according to any of claims 1 to 4, **characterized in that** the barrier layer (6) is designed as a layer made of polyamide or ethylene vinyl alcohol copolymer.

6. Recyclable paper packaging laminate according to claim 5, **characterized in that** the layer made of the barrier polymer is provided with a barrier coating in the form of a metallization or a coating with silicon oxide or aluminum oxide.

7. Recyclable paper packaging laminate according to claim 5, **characterized in that** the barrier film (3) is stretched.

8. Recyclable paper packaging laminate according to any of claims 1 to 7, **characterized in that** the barrier film (3) is joined to a sealing layer (7) on the side facing away from the paper layer (2).

9. Recyclable paper packaging laminate according to claim 8, **characterized in that** the sealing layer (7) consists of polyethylene if the substrate layer (4) consists predominantly of polyethylene, or the sealing layer (7) consists of polypropylene if the substrate layer (4) consists predominantly of polypropylene.

10. Recyclable paper packaging laminate according to claim 8 or 9, **characterized in that** the sealing layer (7) is stretched.

## Revendications

1. Stratifié d'emballage en papier recyclable constitué d'une couche de papier (2) comportant un papier d'un grammage de 30 à 360 g/m² et d'un film barrière (3) relié à celle-ci, **caractérisé en ce que** le film barrière (3) comprend au moins une couche de substrat (4), une couche de liaison (5) et une couche barrière (6), dans lequel la couche de liaison (5) est disposée entre la couche de substrat (4) et la couche barrière (6), **en ce que** la couche de substrat (4) est constituée principalement de polyéthylène ou de polypropylène, avec une proportion de polyéthylène ou une proportion de polypropylène d'au moins 60 % en poids de la couche de substrat (4), de préférence d'au moins 70 % en poids et de manière particulièrement préférée d'au moins 80 % en poids, **en ce que** la couche barrière (6) est réalisée sous forme de couche en polymère barrière et le polymère barrière possède une épaisseur de 20 % maximum, de préférence de 5 à 10 %, de l'épaisseur totale du film barrière (3), **en ce que** la couche de liaison (5) possède une épaisseur de 10 % maximum de l'épaisseur totale du film barrière (3), **en ce qu'**au moins l'au moins une couche de substrat (4) du film barrière (3) est étirée, **en ce que** la proportion de la couche de papier (2) représente entre 50 % en poids et 90 % en poids, de préférence entre 70 % en poids et 90 % en poids, du stratifié d'emballage en papier (1), **et en ce que** le film barrière (3) est relié à la couche de papier (2) par une couche adhésive (9) hydrophile, dans lequel la face de la couche de papier (2) faisant face au film barrière (3) n'est pas revêtue.

2. Stratifié d'emballage en papier recyclable selon la revendication 1,
**caractérisé en ce que** le film barrière (3) est réalisé de manière asymétrique avec une couche de substrat (4) qui est reliée à la couche barrière (6) par l'intermédiaire de la couche de liaison (5).

3. Stratifié d'emballage en papier recyclable selon la revendication 2,
**caractérisé en ce que** la couche barrière (6) est disposée de manière à faire face à la couche de papier (2) et est reliée à la couche de papier (2) par l'intermédiaire de la couche adhésive (9).

4. Stratifié d'emballage en papier recyclable selon la revendication 1,
**caractérisé en ce que** le film barrière (3) est réalisé de manière symétrique avec une couche barrière (6) qui est reliée sur les deux faces à une couche de substrat (4) respectivement par l'intermédiaire d'une couche de liaison (5) et l'une des couches de substrat (4) est reliée à la couche de papier (2) par l'intermédiaire de la couche adhésive (9).

5. Stratifié d'emballage en papier recyclable selon l'une des revendications 1 à 4, **caractérisé en ce que** la couche barrière (6) est réalisée sous forme de couche en polyamide ou en copolymère éthylène-alcool vinylique.

6. Stratifié d'emballage en papier recyclable selon la revendication 5,
**caractérisé en ce que** la couche en polymère barrière est pourvue d'un revêtement barrière sous la forme d'une métallisation ou d'un revêtement comportant de l'oxyde de silicium ou de l'oxyde d'aluminium.

7. Stratifié d'emballage en papier recyclable selon la revendication 5,
**caractérisé en ce que** le film barrière (3) est étiré.

8. Stratifié d'emballage en papier recyclable selon l'une des revendications 1 à 7, **caractérisé en ce que** le film barrière (3) est relié à une couche de scellement (7) sur la face opposée à la couche de papier (2).

9. Stratifié d'emballage en papier recyclable selon la revendication 8,
**caractérisé en ce que** la couche de scellement (7) est constituée de polyéthylène lorsque la couche de substrat (4) est constituée principalement de polyéthylène, ou la couche de scellement (7) est constituée de polypropylène lorsque la couche de substrat (4) est constituée principalement de polypropylène.

10. Stratifié d'emballage en papier recyclable selon la revendication 8 ou 9, **caractérisé en ce que** la couche de scellement (7) est étirée.
